# EUROPEAN PATENT APPLICATION

(11) **EP 3 831 519 A1**
(43) Date of publication of application: **09.06.2021**
(21) Application number: 20208747.4
(22) Date of filing: 19.11.2020
(51) Int. Cl.: B22F 10/22, B22F 10/362, C22C 1/04, B22F 12/13, B22F 12/33, B22F 12/43, B22F 12/47, B22D 21/00, B22D 23/00, B33Y 10/00, B33Y 30/00, B22F 3/115, B22F 12/17

(54) **METHOD OF THREE-DIMENSIONAL PRINTING AND A CONDUCTIVE LIQUID THREE-DIMENSIONAL PRINTING SYSTEM**

(30) Priority: 02.12.2019 US 201916700905
(71) Applicant: Xerox Corporation, Webster, NY 14580 (US)
(72) Inventor: HERRMANN, Douglas K., Webster, NY New York 14580 (US); RUIZ, Erwin, Rochester, NY New York 14608 (US); RACE, Thomas R., Rochester, NY New York 14616 (US); HERLOSKI, Robert P., Webster, NY New York 14580 (US); PROCTOR, Douglas E., Rochester, NY New York 14624 (US); WADE, Thomas F., Rochester, NY New York 14628-1245 (US); JUHASZ, John C., Fairport, NY New York 14450 (US)
(74) Representative: Gill Jennings & Every LLP

(57) **Abstract**

A method of three-dimensional printing comprises heating a first portion of a build surface on a platform by impinging a laser beam on the build surface so as to provide a preheated drop contact point having a first deposition temperature. A first drop of a liquid print material is ejected from a printhead of a 3D printer so as to deposit the first drop on the preheated drop contact point at the first deposition temperature.

## Description

### DETAILED DESCRIPTION

### Field of the Disclosure

The present disclosure is directed to a method of three-dimensional printing using a laser beam for heating a build surface. A conductive liquid three-dimensional printing system that includes a laser is also disclosed.

### Background

Conductive liquid three-dimensional printers for building 3D parts from molten aluminum alloys are known in the art. An example of such a system is disclosed in U.S. Patent No. 9,616,494. The system works by using a DC pulse applied by an electromagnetic coil to expel molten aluminum drops in response to a series of pulses. The platen to which the drops are targeted translates to allow for the drops to be connected and built up to produce a three-dimensional part.

However, the drops of molten aluminum sometimes do not combine smoothly or with sufficient bonding strength. Further, the 3D part can have an undesirable degree of porosity, as well as uneven build surfaces during fabrication, unwelded drops, and shape inconsistencies. All of these lead to degraded physical properties such as fatigue strength and tensile strength, as well as appearance issues, with the final part.

Therefore, methods and systems for improving the quality of three-dimensional parts made from conductive liquid three-dimensional printers would be a step forward in the art.

### SUMMARY

An embodiment of the present disclosure is directed to a method of three-dimensional printing. The method comprises heating a first portion of a build surface on a platform by impinging a laser beam on the build surface so as to provide a preheated drop contact point having a first deposition temperature. A first drop of a liquid print material is ejected from a printhead of a 3D printer so as to deposit the first drop on the preheated drop contact point at the first deposition temperature.

Another embodiment of the present disclosure is directed to a conductive liquid three-dimensional printing system. The system comprises a platform; a printhead for ejecting drops of a conductive liquid print material at drop contact points on the platform; and a laser configured to direct a laser beam at the drop contact points.

It is to be understood that both the foregoing general description and the following detailed description are exemplary and explanatory only and are not restrictive of the present teachings, as claimed.

### BRIEF DESCRIPTION OF THE DRAWINGS

The accompanying drawings, which are incorporated in and constitute a part of this specification, illustrates embodiments of the present teachings and together with the description, serve to explain the principles of the present teachings.
FIG. 1 shows a flowchart of a method of heating a build surface for three-dimensional printing, according to an embodiment of the present disclosure.
FIG. 2 shows a perspective view of a conductive liquid three-dimensional printing system, according to an example of the present disclosure.
FIG. 3 shows an exploded view of the internal components a build nozzle.
FIG. 4 shows a schematic side view of a build nozzle and laser, according to an embodiment of the present disclosure.
FIG. 5 shows a cross-sectional view taken along line 5 of the build nozzle of FIG. 4 that illustrates the internal components of the build nozzle.
FIG. 6 shows a cross sectional view of the printhead, according to an embodiment of the present disclosure.
FIG. 7 shows a cut away, cross sectional perspective view of the nozzle pump containing liquid conductive material and the build surface with a perspective view of the laser, according to an embodiment of the present disclosure.
FIG. 8 shows a schematic cross sectional view of liquid conductive material in the pump chamber, including the flow of liquid material out of the pump chamber and the electromagnetic coil.
FIG. 9 shows a perspective view of the nozzle pump producing drops forming a 3D object, according to an embodiment of the present disclosure.
FIG. 10 illustrates an image of a laser beam incident on a build surface.
FIG. 11 shows a graph of temperature date, according to an example of the present disclosure.

It should be noted that some details of the figure have been simplified and are drawn to facilitate understanding of the embodiments rather than to maintain strict structural accuracy, detail, and scale.

### DESCRIPTION OF THE EMBODIMENTS

Reference will now be made in detail to embodiments of the present teachings, examples of which are illustrated in the accompanying drawings. In the drawings, like reference numerals have been used throughout to designate identical elements. In the following description, reference is made to the accompanying drawing that forms a part thereof, and in which is shown by way of illustration a specific exemplary embodiment in which the present teachings may be practiced. The following description is, therefore, merely exemplary.

During the printing process of molten metal by a conductive liquid three-dimensional printer, the temperature differential between a molten drop ejected from the printer and a build surface causes inconsistencies with the build strength, porosity and surface finish of the final build part. Testing has shown that to properly fuse the molten metal to the base build material the receiving surface temperature can be controlled to a deposition temperature. For example, for aluminum and aluminum alloys this temperature is about 400 °C to about 550 °C, or higher. The conductive liquid three-dimensional printer system uses a heated base plate set to, for example, about 400 °C, to heat the initial layers. However, as the part continues to grow from the base plate, the heating from the base plate is unable to maintain the higher temperatures on the upper surface so as to ensure a good bond between the molten drop and the cooled top surface.

A laser system employed in conjunction with the conductive liquid three-dimensional printer provides for a hybrid system that allows for the lower cost molten drop deposition system to control the temperature at the target location on the build surface where the drops are deposited to provide a strong, cohesive and/or uniform bond of the drop to the build part and/or reduced porosity of the part.

Thus, embodiments of the present disclosure are directed to a hybrid conductive liquid three-dimensional (3D) build system wherein conductive liquid drops are deposited on a build surface while employing a laser pre-heat system to adjust the build surface temperature in the area where the drops come into contact with the build surface. By raising the temperature in a localized area at the drop contact point, a more complete and controlled bonding of the drop to the build surface can be achieved, leading to better build quality and improved material properties across the bond and throughout the finished part. Increasing the temperature of the build surface just before and during the deposition of the drop can improve coalescence of the drop with the previously deposited layer compared to the same process in which the temperature of the build surface is not increased to the desired temperature.

Advantages of the method and system of the present disclosure include one or more of the following: an interactive laser system that can increase performance of build based on time, energy and part structure to improve additive material performance; targeted heating to raise temperature a precise amount in a limited zone to improve part structure in a conductive liquid three dimensional printer; improved part properties, such as lower porosity, higher yield strength, higher fatigue cycles and/or surface quality, among other things; the ability to adjust the localized temperature to improve material bonding during the 3D print; the ability to adjust the localized temperature based on object shape, size and/or material to improve build properties, such as surface appearance and other part properties; allow for heating at the point of impact of the liquid metal with changes in direction of the part during the build process; localized pre-heat can reduce impact to geometric integrity; areas around the heated zone can act as support boundries; the ability to control energy to part based on part geometry by using slicing data; allowance for higher temperature latitude at a focused location (e.g., a voxel), which is something that cannot be attained by conventional surface heating (e.g., radiant or induction heating)

### Method of Three-Dimensional Printing

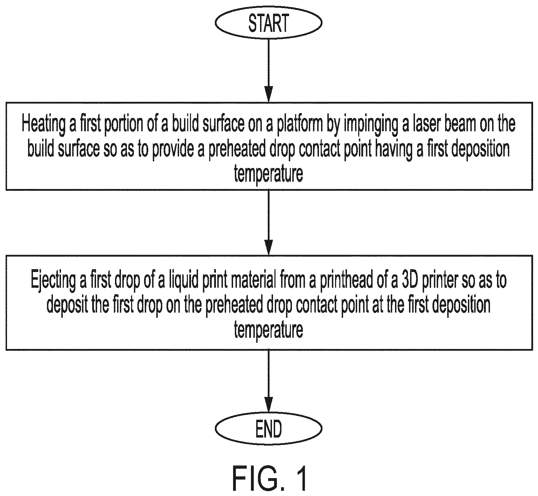

An embodiment of the present disclosure is directed to a method of three-dimensional printing. As shown by the flowchart of FIG. 1, the method comprises heating a first portion of a build surface on a platform by impinging a laser beam on the build surface so as to provide a preheated drop contact point having a first deposition temperature. A first drop of a liquid print material is ejected from a printhead of a 3D printer so as to deposit the first drop on the preheated drop contact point at the first deposition temperature.

The processes of heating a portion of the build surface and ejecting a drop of liquid print material can be repeated any number of times so as to deposit a plurality of drops until the 3D part is completed. For example, the method can include heating a second portion of the build surface that is different from the first portion by impinging a laser beam at the build surface, thereby providing a second preheated drop contact point having a second deposition temperature; and ejecting a second drop of the print material from the printhead to deposit the second drop on the preheated drop contact point at the second deposition temperature. The method further includes adjusting the position of the laser beam relative to the build surface so as to heat the drop contact points on which each successive drop is deposited.

In an embodiment, the drops, (e.g., the first drop, second drop and successively deposited drops) comprise a molten metal. As examples, the molten metal can comprise at least one metal chosen from aluminum (e.g., pure aluminum or aluminum alloys), copper (e.g., pure copper or copper alloys such as bronze), and silver (e.g., pure silver or silver alloys). Examples of aluminum alloys include the 6000 series of alloys such as A1 6061, as well as 300 series such as 356, 7000 series such as 7075, and 4000 series such as 4043. Any other aluminum alloys or other metals that can be printed using liquid 3D printing techniques can be employed. The metal can be supplied to the 3D printer in any desired form, such as wire (e.g., wire comprising any of the metals described herein) or other forms, as described in more detail below.

The deposition temperature of the build surface will depend on the type of material being 3D printed. As an example, for aluminum and aluminum alloys, the deposition temperature may range from about 400°C to about 800°C, such as about 400°C to about 600°C, or about 400°C to about 550°C. Depending on the metal being deposited, temperatures outside these ranges may also be employed. At appropriate deposition temperatures, such as those listed above, the molten drops combine with the build part in a uniform way that produces bonds that create a strong and consistent build structure. On the other hand, when the build surface temperatures fall below about 400 °C for aluminum and aluminum alloys, the drops do not combine as smoothly or with the desired bonding strength. This can result in porosity in the part, uneven build surfaces, unwelded drops, and shape inconsistencies, which in turn, may lead to degraded physical properties, such as fatigue strength and tensile strength as well as appearance issues with the final part. However, if the temperature of the build surface is 400 °C or greater the build quality is more controlled. By targeting the surface with a laser the temperature of the build surface may be controlled and raised to the level that produces an improved bond between the molten drop and the build surface compared to the bond that would otherwise occur if lower build surface temperatures are employed. The laser allows for the surface to be heated as the part is moved through an x, y and z axes build pattern to create the surface layer. The focused energy of the laser allows for a controlled energy delivery to a localized area to be heated (e.g., an area that includes where each of the molten drops directly contact the build surface). This allows for heating the surface of the part as it traverses under the incoming molten drops.

The build surface can be whatever surface on which the drops are deposited. For example, the build surface can be the surface of the platform, sometimes referred to a build plate. In another embodiment, the build surface is a surface portion of a 3D part being built on the platform.

The platform can also be heated by a secondary means other than the laser beam, such as a heating element, radiative heating and so forth. For example, the platform can be heated to a base temperature using the secondary heating means, followed by additional heating with the laser beam. The base temperature can be any desired temperature, such as a temperature ranging from about 300°C to about 500°C, or about 350°C to about 450°C, or about 380°C to about 420°C.

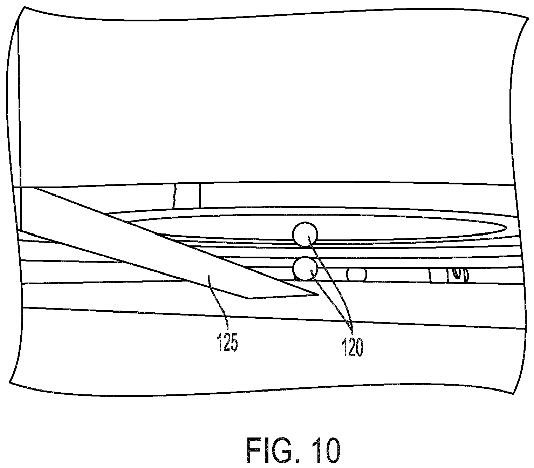

The portion of the build surface radiated by the laser beam is heated, thereby forming a localized hotspot having a temperature that increases compared to the temperature of the surrounding build surface that is not radiated. A molten metal drop ejected onto this hotspot can have improved deposition properties and/or result in a final part with improved characteristics, as described herein. FIG. 10 illustrates an image of a laser beam 125 incident on a build surface prior to deposition of drops 120.

The molten metal drops ejected from the printer can have a diameter of any suitable size prior to deposition on the build surface, such as a diameter ranging from about 0.05 mm to about 2 mm, or about 0.1 mm to about 1 mm, or about 0.5 mm. After deposition, the drops may spread to have a wider dimension. For example, a drop with a diameter of 0.5 mm may spread to cover an area of about 0.7 mm upon impact with the build surface.

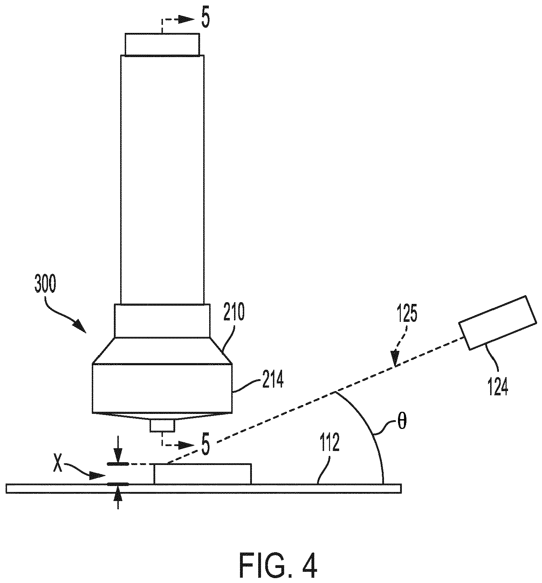

As shown, for example, in FIG. 4, the laser beam 125 is at an angle, ⊖, relative to a top surface of the platform 112. The angle can be any suitable angle that will allow the laser to be incorporated into the system and that will provide effective heating of the build surface by the laser beam. In an embodiment, the angle ranges from about 10 degrees to about 45 degrees, such as about 20 degrees to about 40 degrees, or about 30 degrees.

Any 3D printing technique that ejects molten metal drops can be employed in the methods of the present disclosure. In an embodiment, the 3D printer employs a DC pulse applied by an electromagnetic coil to eject the first drop, as described in greater detail below. The method can include depositing the drops on the build surface at any desired rate. For example, the plurality of drops can be ejected at a frequency ranging from about 0.1 Hz to about 2000 Hz, such as about 1 Hz to about 1200 Hz, or about 10 Hz to about 1000 Hz, or about 100 Hz to about 1000 Hz.

As mentioned above, the method of the present disclosure includes adjusting the position of the laser beam relative to the build surface and repeating the processes of heating portions of the build surface on which the molten metal drops are deposited. The position of the laser beam can be adjusted relative to the build surface by moving the laser, the build surface or both. In an example, as described in greater detail below, the position of the laser beam comprises moving the laser beam and the printhead along a z-axis; and moving the platform along an x-axis, a y-axis or both the x-axis and the y-axis. The movement of the laser beam and the platform can occur simultaneously or at different times.

In an embodiment, the method further comprises determining an amount of heat energy to be applied to the portion of the build surface to achieve the deposition temperature at the drop contact point. The amount of heat energy can be determined based on a number of factors, such as one or more of a geometry of the portion of the build surface, the distance, "X", that the portion of the build surface being radiated is from the platform 112 (FIG. 4), the temperature of the platform and the temperature of the portion of the build surface being radiated. The laser beam can then be controlled based on the amount of heat energy to be applied to the portion of the build surface. For example, the length of time the portion of the build surface is radiated can decreased or increased to provide the desired temperature at the drop contact point.

The build surface can be radiated with the laser to the desired temperature prior to deposition of the drop contact point. It may sometimes be desirable to continue heating the drop contact point for a period of time after the drop is deposited thereon. In an embodiment, application of laser irradiance occurs just before and during the deposition of drop to provide for good coalescence of the drop with the previously deposited layer of the part. In an alternative embodiment, the heating of the build surface at the drop contact point with the laser may stop prior to the drop being deposited on the drop contact point.

### Conductive Liquid Three-Dimensional Printing System

An embodiment of the present disclosure is directed to a conductive liquid three-dimensional printing system that can be used to carry out the three-dimensional printing method described herein. The system comprises a platform and a printhead for ejecting drops of a conductive liquid print material at drop contact points on the platform. A laser is configured to direct a laser beam at the drop contact points.

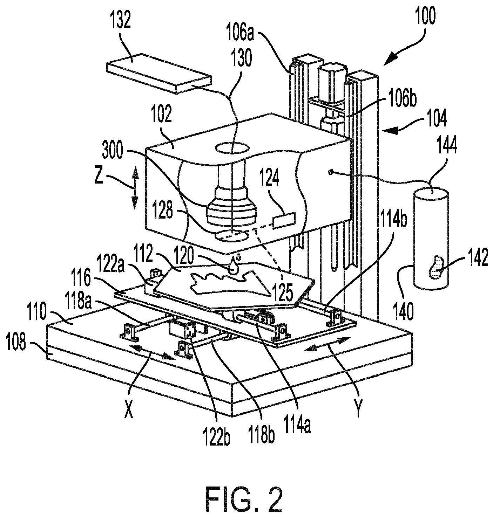

FIG. 2 illustrates an example of a conductive liquid three-dimensional printing system, referred to herein as a liquid metal 3D printer 100. Drops of liquid metal that are used to form a three-dimensional metal object are produced by a printhead 102 supported by a tower 104. The printhead 102 is affixed to vertical z-axis tracks 106a and 106b and can be vertically adjusted, represented as movement along a z-axis, on tower 104. Tower 104 is supported by a frame 108 manufactured, for example, from steel tubing or any other suitable material.

Proximate to frame 108 is a base 110, formed of, for example, granite or other suitable material. Base 110 supports a platform 112 upon which a 3D object is formed. Platform 112 is supported by x-axis tracks 114*a* and 114*b*, which enable platform 112 to move along an x-axis. X-axis tracks 114*a* and 114*b* are affixed to a stage 116. Stage 116 is supported by y-axis tracks 118*a* and 118*b*, which enable stage 116 to move along a y-axis.

As drops of molten metal (e.g., molten aluminum) 120 fall onto platform 112, the programmed horizontal movement of platform 112 along the x and y axes results in the formation of a three-dimensional object. The programmed movement of stage 116 and platform 112 along x-axis tracks 114*a* and 114*b*, and y-axis tracks 118*a* and 118*b* can be performed by means of, for example, an actuator 122*a* and 122*b*, as would be known to a person of ordinary skill in the art. Liquid metal 3D printer 100 was designed to be operated in a vertical orientation but other orientations could also be employed.

FIG. 2 also shows a source of aluminum 132 and aluminum wire 130. Alternative embodiments may utilize aluminum in bar, rod, granular or additional forms. In alternative embodiments, any sufficiently conductive liquid or colloidal mixture could be used in place of aluminum with the proper adjustments to the system, as would be understood by one of ordinary skill in the art.

Printhead 102 includes a nozzle pump 300 and a laser 124. For example, as illustrated in FIG. 2, laser 124 can be disposed within the printhead 102 and configured in a manner that allows a laser beam 125 to travel through an orifice 128 and radiate the build surface (e.g. platform 112 or the three-dimensional part being fabricated thereon). Liquid metal 3D printer 100 and the method of operating the printer are described in greater detail in U.S. Patent No. 9,616,494, the disclosure of which is incorporated herein by reference in its entirety.

The laser can be any suitable type of laser that can achieve the desired irradiance. The irradiance can vary depending on, for example, the type of metal being deposited and the deposition rate. Generally speaking, the faster the drops are ejected onto the build surface the higher the desired irradiance. Examples of desired irradiance ranges are from about 1000 W/cm² to about 10,000 W/cm², such as about 1500 W/cm² to about 5,000 W/cm², or about 2000 W/cm² to about 3,000 W/cm². In an example, the laser can provide a laser beam having an irradiance of 1800 W/cm² or more, such as 2000 W/cm² or more. A laser having any combination of power and optical configuration, including collimated and non-collimated lasers, that can achieve the desired irradiance can be employed.

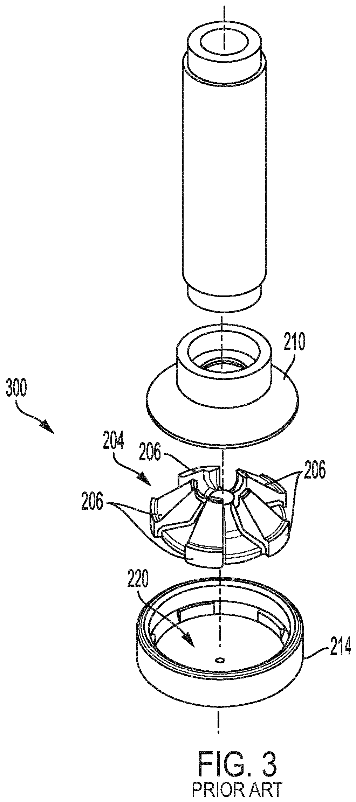

FIG. 3 shows an exploded view of certain internal components of printhead 102, including nozzle pump 300. An upper pump housing 210, pump partition 204, and lower pump housing 214 together form a first chamber, herein referred to as a pump chamber 220. The internal components shown in FIG. 3 are manufactured from a non-conductive material, such as, for example, boron nitride.

FIG. 4 illustrates internal components of printhead 102 assembled. Upper pump housing 210, pump partition 204 (shown in FIG. 3), and lower pump housing 214 are assembled together to form nozzle pump 300.

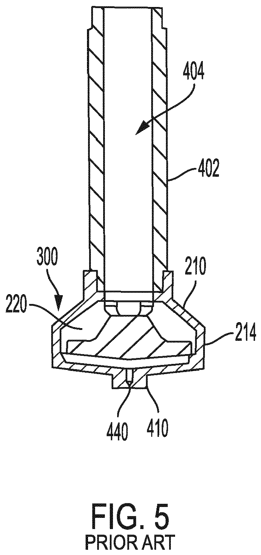

FIG. 5 is a cross-sectional view taken along line 5 of FIG. 4, including the assembled components of nozzle pump 300. FIG. 5 shows a channel 404 extending from a first end where aluminum wire 130 enters printhead 102 and a second end where liquid aluminum leaves channel 404 and enters pump chamber 220. Pump chamber 220 is adjacent to nozzle 410. Surrounding channel 404 is a tundish 402.

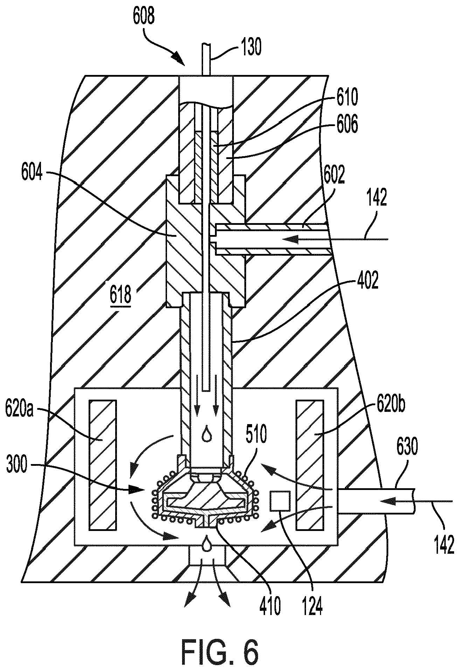

FIG. 6 illustrates a cross-sectional view of a portion of printhead 102, which includes a cooled wire inlet 608, an outer sleeve 606, and the nozzle pump 300 enclosed by electromagnetic coil 510. In an embodiment, aluminum wire 130 is fed into cooled wire inlet 608 and a wire guide and gas seal 610 made of copper. The aluminum wire 130 then passes through an insulating coupler 604, made, for example, of Macor ceramic, where inert gas 142 is supplied through the melt shield gas inlet port 602, also made of, for example, Macor ceramic, to apply a protective inert gas 142 shield before the aluminum is melted.

Melted aluminum, or other electrically conductive liquid, flows downward under gravity and positive pressure exerted by inert gas 142 along a longitudinal z-axis to nozzle pump 300. Electrical heating elements 620*a* and 620*b*, made of, for example, nichrome, heat the interior of a furnace 618, made of, for example, firebrick, to above the 660° C, which is the melting point of aluminum. The thermally conductive tundish 402 transmits heat to aluminum wire 130, as supplied from a source of aluminum 132, causing it to melt as it enters nozzle pump 300. Tundish 402 can comprise, for example, boron nitride or other suitable thermally conductive material.

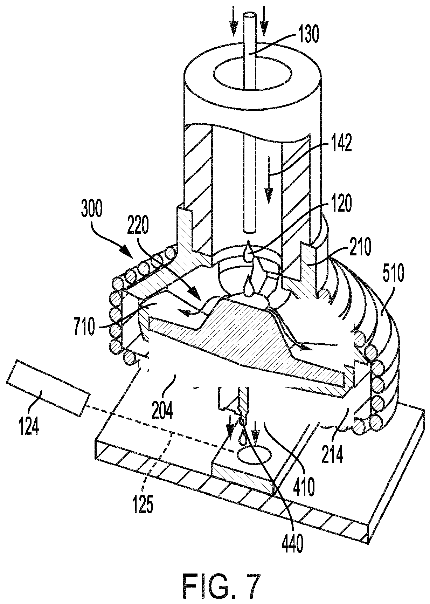

FIG. 7 shows molten aluminum flowing downward through upper pump housing 210 around pump partition 204 to form a charge of molten aluminum 710. Charge of molten aluminum 710 is contained primarily within the pump chamber 220, with a small amount of the molten aluminum contained in upper pump housing 210 to keep pump chamber 220 fully primed. An excess of molten aluminum in the upper section of pump chamber 220 would increase the inertia of the charge of molten aluminum 710 and cause an undesirable decrease in the firing rate of nozzle pump 300. In alternative embodiments the number of dividers in the pump partition 204 may be varied.

Electromagnetic coil 510 is shaped to surround nozzle pump 300. The pressure on the inert gas 142 inside nozzle pump 300 is adjusted to overcome much of the surface tension at the nozzle 410 in order to form a convex meniscus 810. The pre-pressure within pump chamber 220 prior to a pulse is set by inert gas 142 to create convex meniscus 810 with a spherical cap that is less than the radius of nozzle orifice 440. This pressure is determined by Young's law as P=2×surface tension/orifice 440 radius.

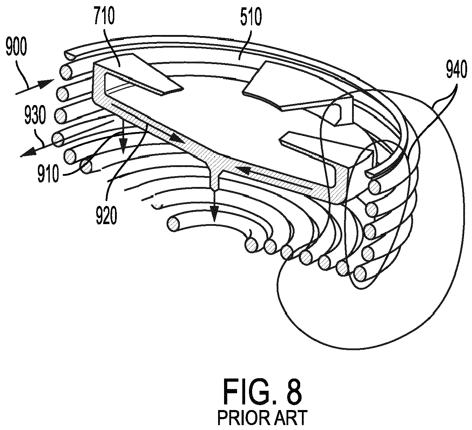

FIG. 8 is a simplified 3D section through nozzle pump 300 showing only the electromagnetic coil 510 and the charge of molten aluminum 710. Charge of molten aluminum 710 is shown at an appropriate level in pump chamber 220 for operation. The shape of the upstream portion of charge of molten aluminum 710 conforms to pump partition 204 and partition dividers 206.

FIG. 8 further shows electromagnetic coil 510 shaped around nozzle pump 300 in such a way as to focus magnetic field lines 940 vertically through the charge of molten aluminum 710. Nozzle pump 300 is transparent to the magnetic field. The electromagnetic coil 510 applies forces to the charge of molten aluminum 710 to pump liquid metal based on the principles of magnetohydrodynamics. A step function direct current (DC) voltage profile applied to the electromagnetic coil 510 causes a rapidly increasing applied current 900 to electromagnetic coil 510, thereby creating an increasing magnetic field that follows the magnetic field lines 940. The optimal range of voltage for the pulse and current strength, as well as the range of time durations for the pulse, for effective operation vary depending on the electrical resistivity of the fluid, viscosity and surface tension. The possible effective range is wide, where alternative embodiments could optimally range from 10 to 1000 volts (V) and 10 to 1000 amperes (A).

According to Faraday's law of induction, the increasing magnetic field causes an electromotive force within the pump chamber 220 which in turn causes an induced current 930 in molten aluminum 710 to flow along circular paths through the charge of molten aluminum 710. The induced current 930 in molten aluminum 710 and the magnetic field produce a resulting radially inward force 920 on molten aluminum, known as a Lorenz force, in a ring shaped element through the charge of molten aluminum 710. The radially inward force on molten aluminum 920 is proportional to the square of the DC voltage applied.

A peak pressure occurring at the inlet to the nozzle 410 is also proportional to the square of the DC voltage applied. This pressure overcomes surface tension and inertia in the molten aluminum to expel the drop of molten aluminum. At the same time, the computer causes stage 116 to move to deposit the drop of molten aluminum in the desired location on platform 112.

In alternative embodiments of the present invention, the shape of the nozzle may be varied to achieve a smooth inlet bell. In one embodiment, an efficient intrinsic electromagnetic heating mode is possible by pulsing the electromagnetic coil at approximately 20 us, 300 amps and 1500 Hz. This creates sufficient heat to maintain the housing and aluminum at 750 C thereby melting the aluminum. The heat is created through resistive losses in the electromagnetic coil and inductive heating within the aluminum. Use of this heating mode eliminates the need for any external heating system.

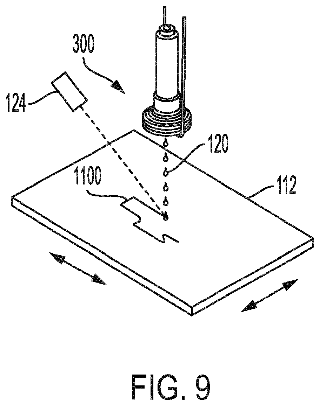

FIG. 9 illustrates nozzle pump 300 producing a drop of molten aluminum 120 during formation of a 3D printed object 1100 on platform 112. The 3D printed object 1100 is the location to which molten metal droplets are directed from nozzle 410. As each drop of molten aluminum 120 is deposited, it solidifies, thereby increasing the volume of 3D printed object 1100. The proper orientation of 3D printed object 1100 is maintained by computer programs that control and coordinate the movement of platform 112.

### EXAMPLES

A thermocouple was buried roughly at the center within an aluminum part having a volume of about 500 mm³. The part was made by 3D printing using a conductive liquid three-dimensional build system similar to that shown in FIG. 2. A surface of the part was pre-heated using a 150W 976nm Fiber-Couple Laser Diode, targeting the surface with the emitted laser beam at an acute angle of about 30° relative to the build surface. The laser beam had a 3 mm diameter and an irradiance level of ∼2000 W/cm².

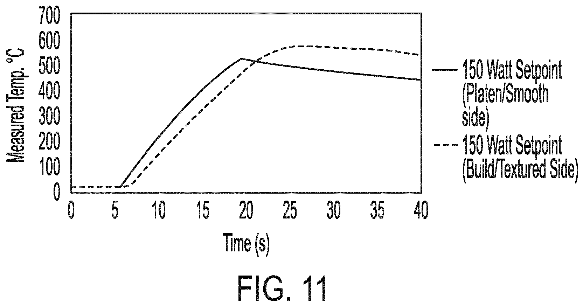

The temperature of the 3D printed metal part was recorded with time and the results are shown in the graph of FIG. 11. The two curves in the FIG. 11 plot are the measured temperature results from two different sides of the part. A smooth side, which has relatively good coalescence and a build side, which has relatively poor coalescence. The results indicate that even a relatively low power laser can effectively heat an aluminum part. Heating time of the part may be reduced significantly by optimization of, for example, laser type, power, beam diameter, and angle can be adjusted optimize energy transfer.

Notwithstanding that the numerical ranges and parameters setting forth the broad scope of the disclosure are approximations, the numerical values set forth in the specific examples are reported as precisely as possible. Any numerical value, however, inherently contains certain errors necessarily resulting from the standard deviation found in their respective testing measurements. Moreover, all ranges disclosed herein are to be understood to encompass any and all sub-ranges subsumed therein.

While the present teachings have been illustrated with respect to one or more implementations, alterations and/or modifications can be made to the illustrated examples without departing from the spirit and scope of the appended claims. In addition, while a particular feature of the present teachings may have been disclosed with respect to only one of several implementations, such feature may be combined with one or more other features of the other implementations as may be desired and advantageous for any given or particular function. Furthermore, to the extent that the terms "including," "includes," "having," "has," "with," or variants thereof are used in either the detailed description and the claims, such terms are intended to be inclusive in a manner similar to the term "comprising." Further, in the discussion and claims herein, the term "about" indicates that the value listed may be somewhat altered, as long as the alteration does not result in nonconformance of the process or structure to the illustrated embodiment. Finally, "exemplary" indicates the description is used as an example, rather than implying that it is an ideal.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompasses by the following claims.

## Claims

1. A method of three-dimensional printing, the method comprising:
a) heating a first portion of a build surface on a platform by impinging a laser beam on the build surface so as to provide a preheated drop contact point having a first deposition temperature; and
b) ejecting a first drop of a liquid print material from a printhead of a 3D printer so as to deposit the first drop on the preheated drop contact point at the first deposition temperature.

2. The method of claim 1, wherein the first drop is a molten metal.

3. The method of claim 2, wherein the molten metal comprises at least one metal chosen from aluminum, copper and silver.

4. The method of claim 2, wherein the molten metal is aluminum or an aluminum alloy.

5. The method of claim 1, wherein the deposition temperature ranges from about 400°C to about 800°C, such as about 400°C to about 600°C, or about 400°C to about 550°C.

6. The method of claim 1, wherein the build surface is the surface of the platform.

7. The method of claim 1, wherein the build surface is a surface of a 3D part being built on the platform.

8. The method of claim 1, wherein the laser beam is at an angle relative to a top surface of the platform, the angle ranging from about 10 degrees to about 45 degrees.

9. The method of claim 1, wherein the 3D printer employs a DC pulse applied by an electromagnetic coil to eject the first drop.

10. The method of claim 1, further comprising adjusting the position of the laser beam relative to the build surface and repeating the processes of a) and b).

11. The method of claim 10, wherein adjusting the position of the laser beam comprises moving the laser beam and the printhead along a z-axis.

12. The method of claim 10, wherein adjusting the position of the laser beam comprises moving the platform along an x-axis, a y-axis or both the x-axis and the y-axis.

13. The method of claim 1, further comprising depositing a plurality of drops on the build surface, the plurality of drops being ejected at a frequency ranging from about 0.1 hz to about 2000 hz.

14. The method of claim 1, further comprising heating a second portion of the build surface by impinging the laser beam at the second portion, thereby providing a second preheated drop contact point having a second deposition temperature; and ejecting a second drop of the print material from the printhead to deposit the second drop on the second preheated drop contact point at the second deposition temperature.

15. The method of claim 1, further comprising determining an amount of heat energy to be applied to the portion of the build surface to achieve the deposition temperature based on one or more of the geometry of the portion of the build surface, the distance of the portion of the build surface from the platform, the temperature of the platform and the temperature of the portion of the build surface; and controlling the laser beam based on the amount of heat energy to be applied to the portion of the build surface.

16. The method of claim 1, wherein the laser beam has an irradiance of from about 1000 W/cm² to about 10,000 W/cm².

17. A conductive liquid three-dimensional printing system, the system comprising:
a platform;
a printhead for ejecting drops of a conductive liquid print material at drop contact points on the platform; and
a laser configured to direct a laser beam at the drop contact points.

18. The system of claim 17, wherein the printhead comprises an electromagnetic coil for applying a DC pulse for ejecting the drops.

19. The system of claim 17, wherein the laser is configured to direct the laser beam at an angle relative to a work surface of the platform, the angle ranging from about 10 degrees to about 45 degrees.

20. The system of claim 17, wherein the laser is configured to have an irradiance of from about 1000 W/cm² to about 10,000 W/cm².
